# EUROPEAN PATENT APPLICATION

(11) **EP 4 510 020 A1**
(43) Date of publication of application: **19.02.2025**
(21) Application number: 23315317.0
(22) Date of filing: 17.08.2023
(51) Int. Cl.: G06F 21/32, G06F 21/62, H04L 9/40

(54) **METHODS AND SYSTEMS FOR COMMUNICATING WITH SECURITY SERVERS**

(71) Applicant: Amadeus S.A.S., 06410 Biot (FR)
(72) Inventor: Abraham, Eldho, 06410 BIOT (FR); Merritt, Joshua, 06410 BIOT (FR)
(74) Representative: Samson & Partner Patentanwälte mbB

(57) **Abstract**

A method is provided for communicating with a security server performed by an application executing on a mobile device, including:
receiving biographic and biometric data captured from a passport;
encrypting the biographic data to generate encrypted biographic data;
processing the biometric data to generate processed biometric data;
communicating the encrypted biographic data and processed biometric data to the security server for submission to a validation operation;
receiving a validation result message;
in the event that the validation result message indicates success of the validation operation, receiving confirmation biometric data captured by the mobile device;
communicating the confirmation biometric data to the security server for submission to a biometric enrolment operation; and
receiving an enrolment result message indicating a result of the biometric enrolment operation.

## Description

### FIELD OF THE INVENTION

The present invention relates generally to methods and systems for communicating with security servers, such as servers that store and process biographic and biometric data. More specifically, the present invention relates to methods that are performed on mobile devices that allow passengers to securely communicate with security servers for purposes such as biometric enrolment. The present invention also relates to methods performed on security servers for similar purposes.

### BACKGROUND TO THE INVENTION

Biometric information, such as a facial image, is increasingly being used in conjunction with passports in the security measures that are adopted at international departure and arrival points. For example, some airports have implemented systems that partially or fully automate the process of verifying the identity of passengers as they arrive at or depart from the airport. These automated processes typically involve capturing a facial image of the passenger while the passenger submits their passport to a passport scanning device. The captured facial image is compared using facial recognition algorithms against the passenger's photograph that the passport scanning device extracts from the passport. The passenger's identity is verified in the event that the two images match.

More recently, some airports are proposing to allow passengers to submit to identity verification before passing through a secured area and having a facial image taken. These services would operate through a mobile application that the passenger uses to take a "selfie" photograph of themselves. It is anticipated that the mobile application submits the selfie to a security server at which the identity verification process is performed.

Little thought has been given to the problem of integrating such mobile applications into identity verification systems in a way that they function correctly while still protecting the passenger's personally identifiable information (PII) in transit.

The present invention aims to provide methods and systems that allow passengers to securely communicate with security servers for purposes such as identity verification.

Any discussion of documents, devices, acts or knowledge in this specification is included to explain the context of the invention. It should not be taken as an admission that any of the material formed part of the prior art base or the common general knowledge in the relevant art on or before the priority date of the claims herein.

### SUMMARY OF THE INVENTION

According to an aspect of the present invention, there is provided a method for communicating with a security server performed by an application executing on a mobile device, the method comprising the application:
receiving biographic data captured from a passport;
receiving biometric data captured from the passport;
encrypting the biographic data to generate encrypted biographic data;
processing the biometric data to generate processed biometric data;
communicating the encrypted biographic data and processed biometric data to the security server for submission to a validation operation;
receiving a validation result message;
in the event that the validation result message indicates success of the validation operation, receiving confirmation biometric data captured by the mobile device;
communicating the confirmation biometric data to the security server for submission to a biometric enrolment operation; and
receiving an enrolment result message indicating a result of the biometric enrolment operation.

The present invention provides a secure mobile application that allows passengers to undergo both a verification process using data extracted from a passport and a biometric enrolment process in which the passenger enrols their biometric information in an identity management system platform. The mobile application according to the invention executes security routines on the mobile device itself to ensure that the passenger's PII is secure in transit.

Preferably, the method further comprises:
receiving travel data from the mobile device; and
communicating the travel data to the security server for submission to the validation operation.

According to this embodiment, the passenger can enter travel data into the application (such as by scanning a boarding pass) that the application communicates to the security server for use in the validation operation.

In some embodiments, processing the biometric data to generate processed biometric data comprises hashing the biometric data.

Typically, the confirmation biometric data is a facial image captured using the mobile device.

In some embodiments, the method further comprises encrypting the processed biometric data to generate encrypted processed biometric data and communicating the encrypted processed biometric data to the security server for submission to the validation operation.

The validation operation may comprise performing a comparison operation on the biographic data and travel data to determine a degree of similarity between the biographic data and the travel data.

The method may further comprise communicating the biometric data to the security server for submission to the biometric enrolment operation.

Preferably, encrypting the biographic data to generate encrypted biographic data comprises the application:
deriving an encryption key from a key input; and
encrypting the biographic data with the derived encryption key.

Encrypting the biographic data to generate encrypted biographic data may further comprise encrypting the key input with a public key to generate an encrypted key input.

In some embodiments, the biometric enrolment operation comprises performing a comparison operation on the biometric data and confirmation biometric data to determine a degree of similarity between the biometric data and the confirmation biometric data.

The biometric enrolment operation may further comprise:
processing the biometric data to generate new processed biometric data; and
performing a comparison operation on the processed biometric data and new processed biometric data to determine a degree of similarity between the processed biometric data and the new processed biometric data.

The validation operation may comprise storing a validation data structure, the validation data structure comprising the encrypted biographic data and processed biometric data.

In some embodiments, the method further comprises the application receiving the validation data structure with or separately to the validation result message.

### BRIEF DESCRIPTION OF THE DRAWINGS

Embodiments will now be described by way of example only, with reference to the accompanying drawings in which:
Figure 1 is a schematic representation of a computing environment in which aspects of the present invention can be implemented;
Figure 2 is a sequence diagram illustrating an exemplary use of a mobile application by a passenger to validate an international travel booking with a security server.
Figure 3 is a sequence diagram illustrating an exemplary use of the mobile to securely enrol the passenger's biometric data with an identity management platform.
Figure 4 is a block diagram illustrating the software modules of the mobile application that encrypt the passenger's PII.
Figure 5 is a block diagram illustrating the software modules of the mobile application that process and encrypt certain image files.
Figure 6 is a block diagram illustrating the software modules of the security server that decrypt the encrypted PII and processed image files.
Figure 7 is a is a block diagram of a computer system suitable for implementing an embodiment of the present invention.

### DETAILED DESCRIPTION OF THE DRAWINGS

In the following detailed description, reference is made to accompanying drawings which form a part of the detailed description. The illustrative embodiments described in the detailed description and depicted in the drawings, are not intended to be limiting. Other embodiments may be utilised and other changes may be made without departing from the spirit or scope of the subject matter presented. It will be readily understood that the aspects of the present disclosure, as generally described herein and illustrated in the drawings can be arranged, substituted, combined, separated and designed in a wide variety of different configurations, all of which are contemplated in this disclosure.

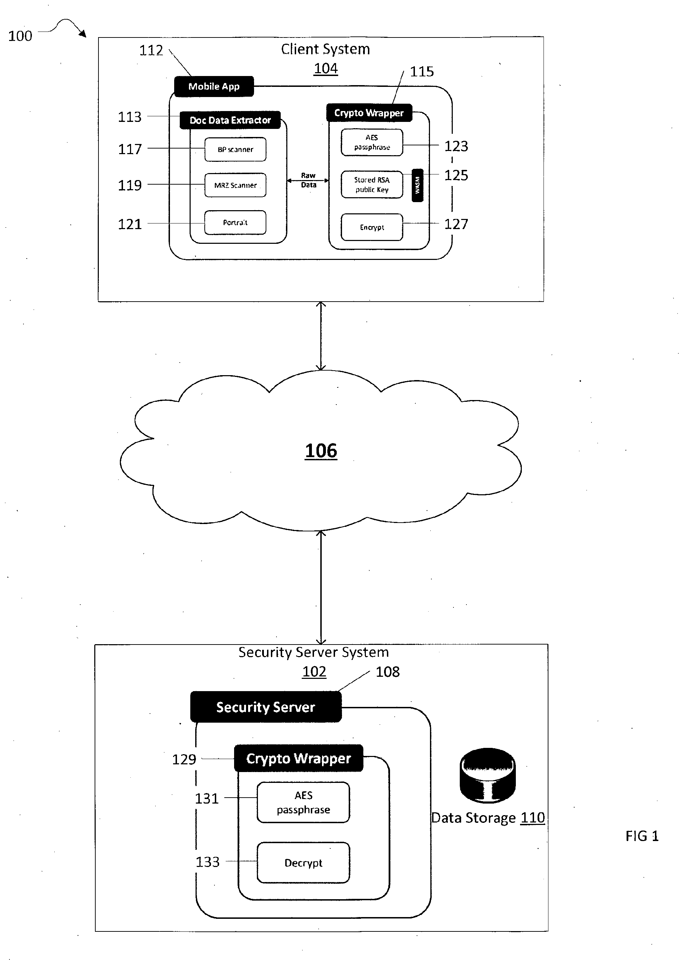

FIG. 1 illustrates a computing environment 100 in which aspects of the present invention are implemented. The environment 100 is a networked environment comprising a Security Server System 102 in communication with a Client System 104 over one or more communication networks 106. Aspects of the computer processing described below are performed by a Security Server Application 108 executing on the Security Server System 102 and a Mobile Application 112 executing on the Client System 104. Mobile Application 112 is comprised of a Document Data Extractor Module 113 and a Crypto Wrapper Module 115, the components and functionalities of which are further exemplified below.

Security Server System 102 further includes a Data Storage 110 on which data collected by the Mobile Application 112 and transmitted to the Security System Server 102 is stored. Data storage 110 is typically a storage medium such as a hard drive (or collection of hard drives). A database management system (not shown) executing on the Security Server System 102 implements a database on Data Storage 110 for storing and retrieving data.

Security Server System 102 has been illustrated as a single system. Security Server System 102 can, however, be a scalable server system comprising multiple nodes which can be commissioned/decommissioned based on processing demands. Typically, server systems are server computers that provide greater resources (e.g. processing, memory, network bandwidth) in comparison to client systems.

In the illustrated embodiment, Data Storage 110 is illustrated as part of the Security Server System 102. However, the Data Storage 110 could be a separate system in operative networked communication with the Security Server System 102. For example, the Data Storage 110 could be a networked-attached storage device, an entirely separate storage system accessed via a database management system, or any other appropriate data storage mechanism.

As exemplified in further detail below, the Security Server Application 108 performs various operations in response to commands received from (and initiated at) the Mobile Application 112. As such, when executed by the Security Server System 102, the Security Server Application 108 configures the Security Server System 102 to provide server-side functionality to the Mobile Application 112. To provide this functionality, the Server Application 108 comprises one or more suitable application programs, libraries, or other software infrastructure.

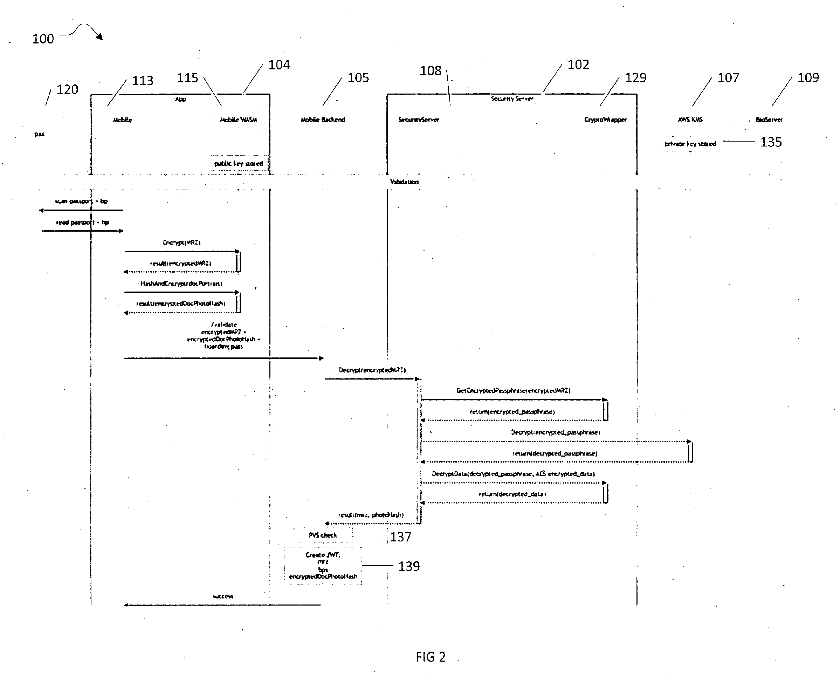

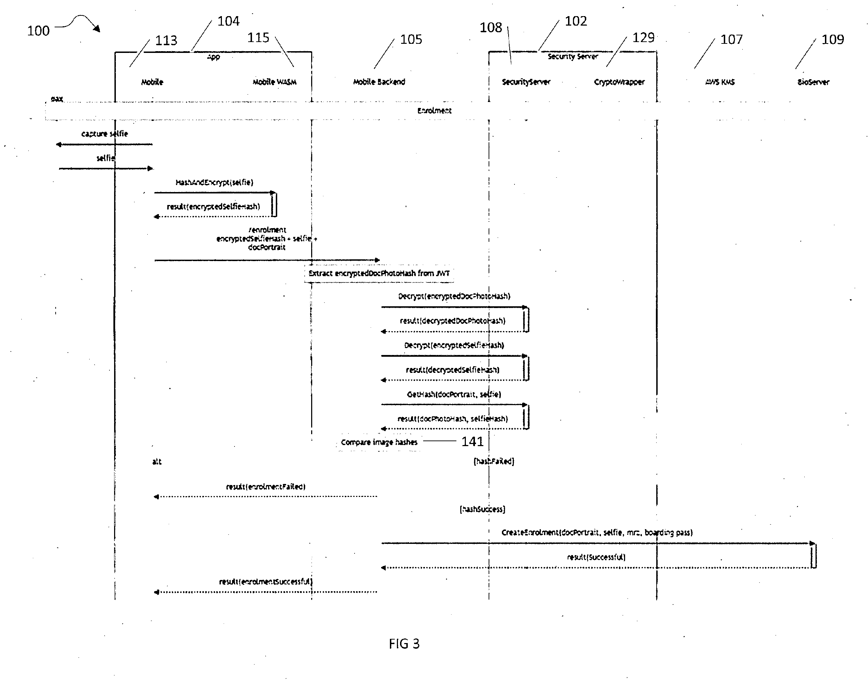

As shown in the exemplified embodiments of Figures 2 and 3, the Security Server System 102 is communicatively coupled with the Client System by way of a Mobile Backend 105. Mobile Backend 105 provides a set of services and infrastructure that supports the functionalities of the Mobile Application 112. Those skilled in the art will appreciate that the Security Server Application 108 can execute wholly or partly on the Mobile Backend 105, on the Security Server System 102 or on both.

Where the Mobile Application 112 is a web application that is executed by a web browser, the Security Server Application 108 will typically be, or interact with, a web server such as a server implemented with the node.js runtime environment. Where the Security Server Application 112 is a native application of the Client System 104, the Security Server Application 108 will typically be, or interact with, an application server. Security Server System 102 may be provided with both web server and application server applications to enable it to serve both web browser and native client applications.

The Security Server System 102 and Client System 104 communicate data between each other either directly or indirectly through one or more Communications Networks 106. Communications network 106 may comprise a local area network (LAN), a public network (such as the Internet), or a combination of networks.

While only one Client System 104 is depicted in environment 100, a typical environment would typically include many more client systems served by the Security Server System 102.

While Client System 104 can be any type of computer system, including a desktop computer or laptop computer, it will more commonly be a smartphone or a tablet device with an integrated or connected camera. When executed by the Client System 104, the Mobile Application 112 configures the Client System 104 to provide client-side functionality that allows a passenger to interact with the Security Server System 102 and validate a booking of an international flight therewith.

Mobile Application 112 also configures the Client System 104 to provide client-side functionality that allows a passenger to securely enrol their biometric data with an Identity Management Platform. In the embodiments exemplified in Figures 1-3, the Identity Management Platform is executed on a secure BioServer 109. The BioServer 109 is communicatively coupled with the Security Server System 102.

In the exemplified embodiment, the computing environment 100 also includes a Key Management Service 107. The Key Management Service 107 is communicatively coupled with the Security Server System 102. The Key Management Service 107 also provides cryptographic tools to the Mobile Application 112 that allow the Mobile Application 112 to create and control cryptographic keys that are used to encrypt and decrypt data.

As noted above, the Mobile Application 112 may be provided to the Client System 104 as a web application that is executed by a general web browser application (such as Chrome, Edge, Safari or the like) that is installed thereon. When provided as a web application, the Mobile Application 112 accesses the Security Server Application 108 via an appropriate uniform resource locator (URL) and communicates with the Security Server Application 108 via general world-wide-web protocols (e.g. http, https, ftp) and application programming interfaces (APIs) (e.g. REST APIs). Alternatively, when the Mobile Application 112 is a native application, it is typically programmed to communicate with the Security Server Application 108 using defined API calls.

A given Client System 104 may have more than one client application 112 installed thereon, for example both a general web browser application and a dedicated programmatic client application.

Mobile Application 112 is optimally coded in a systems programming language (such as C, C++ or Rust) and compiled into a binary instruction format that is suitable for execution on a web browser. In the exemplified embodiment, the Mobile Application 112 is coded in C++ and compiled into WebAssembly (WASM). When the Mobile Application 112 is a native application, the application utilises WebViews to open the web application and execute computationally expensive operations using the WebAssembly code.

WebAssembly as a compilation target has the advantage of access to cryptographic libraries that are not accessible to a web browser executing Javascript. In turn, access to cryptographic libraries allows the Mobile App 112 to perform encryption directly on the Client System 104. This improves the security of the passenger's personally identifiable information (PII) that the passenger necessarily discloses during the course of Validation and Biometric Enrolment.

As noted above, the Mobile App 112 includes a Document Data Extractor Module 113 and a Crypto Wrapper Module 115. The Document Data Extractor Module 113 provides functionality to the passenger to extract pertinent travel data from travel-related documents. To this end, the Document Data Extractor Module 113 includes a:
- Boarding Pass Scanner 117 that controls the in-built camera of the Client System 104 to capture an image of the passenger's boarding pass and (if necessary) performs optical character recognition thereon.
- MRZ Scanner 119 that controls the in-built camera of the Client System 104 to capture an image of the Machine Readable Zone (MRZ) of the passenger's passport and performs optical recognition thereon.
- Portrait Scanner 121 that extracts an image file of the passenger's passport portrait: In the case where the Mobile App 112 is a native app that has access to the Client System's 104 NFC chip, the Portrait Scanner 121 can establish a wireless connection with the passport's NFC chip and retrieve the image file of the passport photograph stored thereon. In the case where the Mobile App 112 is a web application, the Portrait Scanner 121 controls the in-built camera of the Client System 104 to capture an image of the passport photo from the passenger's passport.

The Crypto Wrapper Module 115 provides functionality for encrypting the travel data that the Document Data Extractor 113 extracts. To this end, the Crypto Wrapper Module includes an:
- Advanced Encryption Standard (AES) Passphrase 123 for generating an encryption key.
- RSA Public Key 125 for use with an asymmetric encryption algorithm.
- Encryption Module 127 for performing encryption with a suitable encryption key.

The Security Server Application 108 that executes on the Security Server System 102 also includes a Crypto Wrapper Module 129. Crypto Wrapper Module 129 provides functionality for decrypting encrypted travel related data that the Mobile Application 112 communicates to the Security Server Application 108 over network 106. To this end, the Crypto Wrapper Module 129 includes:
- Advanced Encryption Standard (AES) Passphrase 131 for generating an encryption key.
- Decryption Module 133 for performing decryption with a suitable encryption key.

An exemplary use of the Mobile Application 104 by a passenger 120 to validate an international travel booking with the Security Server Application 108 is illustrated by reference to the Sequence Diagram in Figure 2.

Initially, the passenger 120 operates the Boarding Pass Scanner 117, MRZ Scanner 119 and Portrait Scanner 121 of the Document Data Extractor 113 to scan a boarding pass and extract passport data from a passport. In the exemplified embodiment, the extracted passport data includes biographic data that is encoded in the MRZ of the passport. Typically, this biographic data encodes the following biographic information about the passenger and passport: Document Type, Issuing Country, Surname, Given Names, Document Number, Document Check Digit, Nationality, Date of Birth, Date of Birth Check Digit, Sex, Expiration Date and Expiration Date Check Digit. In the exemplified embodiment, the MRZ Scanner 119 encodes the biographic data into an MRZ string and supplies the MRZ string to the Crypto Wrapper 115.

In the exemplified embodiment, the extracted passport data also includes biometric data in the form of the passport portrait. As noted above, depending on the implementation of the Mobile Application 112, the Portrait Scanner 121 either directly extracts the image file of the passport portrait from the passport's NFC chip, or displays a graphical user interface on the Client System 104 that instructs the passenger 120 to capture an image of the passport portrait that is printed on the passport. In either scenario, the Document Extractor 113 supplies a docPortrait (namely an image file of the passport photograph) to the Crypto Wrapper 115.

After the Crypto Wrapper 115 receives the MRZ string, the Crypto Wrapper 115 encrypts the MRZ string and returns an encrypted MRZ string (encryptedMRZ) to the Document Extractor 113. The operations that the Crypto Wrapper 115 performs to encrypt the MRZ string are described in further detail below.

After the Crypto Wrapper 115 receives the docPortrait, the Crypto Wrapper 115 hashes the docPortrait and encrypts the hashed docPortrait. The Crypto Wrapper 115 then returns the resulting data package (result(encryptedDocPhotoHash)) to the Document Extractor 113.

Upon receipt of the result(encryptedDocPhotoHash) data package, the Document Extractor 113 constructs a validation data package and communicates the validation data package to the Mobile Backend 105 for validation. The validation data package includes the scanned boarding pass, encryptedMRZ and encrypted DocPhotoH ash.

Significantly, the PII data comprised in the MRZ is encrypted before it is communicated out from the Client Device 104. Thus, even if the data stream is intercepted and analysed before reaching the Mobile Backend 105, the PII data is secure.

After receiving the validation data package, the Mobile Backend 105 sends a package decryption message to the Security Server Application 108 executing on the Security Server System 102. The package decryption message includes the encryptedMRZ and encryptedDocPhotoHash that the Mobile Backend 105 extracts from the validation data package.

After receiving the encrypted MRZ, the Security Server Application 108 sends a passphrase message to the Crypto Wrapper 129 executing on the Security Server System 102 requesting the Crypto Wrapper 129 to supply an encrypted passphrase. The passphrase message includes the encrypted MRZ.

After receiving the passphrase message, the Crypto Wrapper 129 returns an encrypted passphrase message to the Security Server Application.

After receiving the encrypted passphrase message, the Security Server Application 108 sends a passphrase decryption message to the Key Management Service 109. The passphrase decryption message includes the encrypted passphrase.

After receiving the passphrase decryption message, the Key Management Service 109 performs decryption operations on the encrypted passphrase that utilise a stored private key 135 (described in further detail below) and returns the decrypted passphrase to the Security Server Application 108.

After receiving the decrypted passphrase, the Security Server Application 108 sends a data decryption message to the Crypto Wrapper 129. The data decryption message includes the decrypted passphrase and the data that is to be decrypted, namely the encrypted MRZ and encryptedDocPhotoHash.

After receiving the data decryption message, the Crypto Wrapper 129 extracts the data therefrom and performs operations (described in further detail below) to decrypt the data. The Crypto Wrapper 129 returns the decrypted data to the Security Server Application 108. In turn, the Security Server Application 108 returns the decrypted data to the Mobile Backend 105 as the return value of the package decryption message. The decrypted data includes the MRZ that was extracted from the passport and the photohash (namely the hash of the document portrait).

After receiving the decrypted data, the Mobile Backend 105 executes computing operations that perform a Passenger Validation Check 137. In the exemplified embodiment, the Passenger Validation Check 137 involves the Mobile Backend 105 retrieving booking information from the airline's booking system using the data from the boarding pass. The booking information is then cross-checked by determining whether the passport number from the MRZ is present therein. The Mobile Backend 105 also performs name matching between the passenger's name as it appears in the boarding pass and the name extracted from the MRZ. Those skilled in the art will appreciate that other passenger validation checks can be performed by retrieving relevant travel-related datasets using boarding pass data and comparing the biographic data extracted from the MRZ against the retrieved dataset.

In the event that the Passenger Validation Check 137 is successful, the Mobile Backend 105 executes computing operations that create a JSON Web Token (JWT) on the Mobile Backend 105. In the exemplified embodiment, the payload of the JWT includes the MRZ, encrypted MRZ, boarding pass and encrypted document photo hash.

After creating the JWT, the Mobile Backend 105 sends a success message to the Document Data Extractor Module 113 indicating that the passenger 120 has successfully validated their international travel booking with the Security Server Application 108. In some embodiments, the Mobile Backend 105 communicates the JWT to the Mobile Application 104 for the Mobile Application 104 to use in future communications with the Mobile Application 105.

An exemplary use of the Mobile Application 104 by the passenger 120 to securely enrol biometric data with an Identity Management Platform executing on the BioServer is illustrated by reference to the Sequence Diagram in Figure 3.

Initially, the passenger 120 operates the in-built camera in response to a user interface displayed by the Document Data Extractor 113 to capture a photograph of themselves (namely a "selfie"). Upon the Document Data Extractor 113 receiving the selfie, the Document Data Extractor sends a hashencrypt message to the Crypto Wrapper 115. The hashencrypt message includes the image file of the selfie.

After receiving the hashencrypt message, the Crypto Wrapper 115 utilises the Encryption Module 127 to hash the image file of the selfie that is contained in the hashencrypt message and encrypt the selfie hash. The Crypto Wrapper 115 sends a hashresult message to the Document Data Extractor 113. The hashresult message includes the encrypted selfie hash (encryptedSelfieHash).

Upon receipt of the encryptedSelfieHash, the Document Data Extractor 113 sends an enrolment message to the Mobile Backend 105 to enrol the passenger's biometric data with the Identity Management Platform. The enrolment message includes the encryptedSelfieHash, as well as the image file of the selfie and the docPortrait (namely the image file of the passport photograph that the Document Data Extractor 113 had previously extracted).

Upon receiving the enrolment message, the Mobile Backend 105 extracts the encrypted document photo hash from the previously stored JWT. The Mobile Backend 105 then sends a photohash decryption message to the Security Server Application 108 executing on the Security Server System 102. The photohash decryption message includes the encrypted document photo hash.

After receiving the photohash decryption message, the Security Server Application 108 decrypts the encrypted document photo hash and sends a decryption result message to the Mobile Backend 105. The decryption result message includes the decrypted document photo hash.

After receiving the decryption result message, the Mobile Backend 105 sends a selfie hash decryption message to the Security Server Application 108. The selfie hash decryption message includes the encrypted selfie hash.

After receiving the selfie hash decryption message, the Security Server Application 108 decrypts the encrypted selfie hash and sends a decryption result message to the Mobile Backend 105. The decryption result message includes the decrypted selfie hash.

After receiving the decryption result message, the Mobile Backend 105 sends a get hash message to the Security Server Application 108. The get hash message includes the image files of the document Portrait and selfie.

After receiving the get hash message, the Security Server Application 108 computes hashes of the document portrait and selfie and sends a hash result message to the Mobile Backend 105. The hash result message includes the hashes of the document portrait and selfie.

After receiving the hash result message, the Mobile Backend 105 executes computing operations 141 that compare the document portrait hash contained in the hash result message with the document portrait hash previously received at the Mobile Backend 105.

In the event that the result of the Hash Comparison Operation 141 is successful (document portrait hash is identical to the previously stored hash), the Mobile Backend 105 sends a create enrolment message to the BioServer 109. The create enrolment message includes the document portrait, selfie, MRZ and boarding pass.

Upon receiving the create enrolment message, the BioServer 109 executes computing operations to enol the biometric data in the Identity Management Platform executing thereon. Those skilled in the art will appreciate that the BioServer 109 can execute any suitable enrolment operations on the data contained in the create enrolment message. Typical enrolment operations involve executing facial recognition algorithms on the document portrait and selfie to verify that the same person is depicted in both images.

After performing the enrolment operations, the BioServer 109 sends an enrolment result message to the Mobile Backend 105. The enrolment result message indicates whether the biometric data was successfully enrolled in the Identity Management Platform executing on the BioServer 109.

Upon receiving the enrolment result message, the Mobile Backend forwards the enrolment result message to the Mobile Application 112. The Mobile Application 112 then displays a graphical user interface on the Client System 104 to indicate to the passenger 120 whether the biometric enrolment operation was successful.

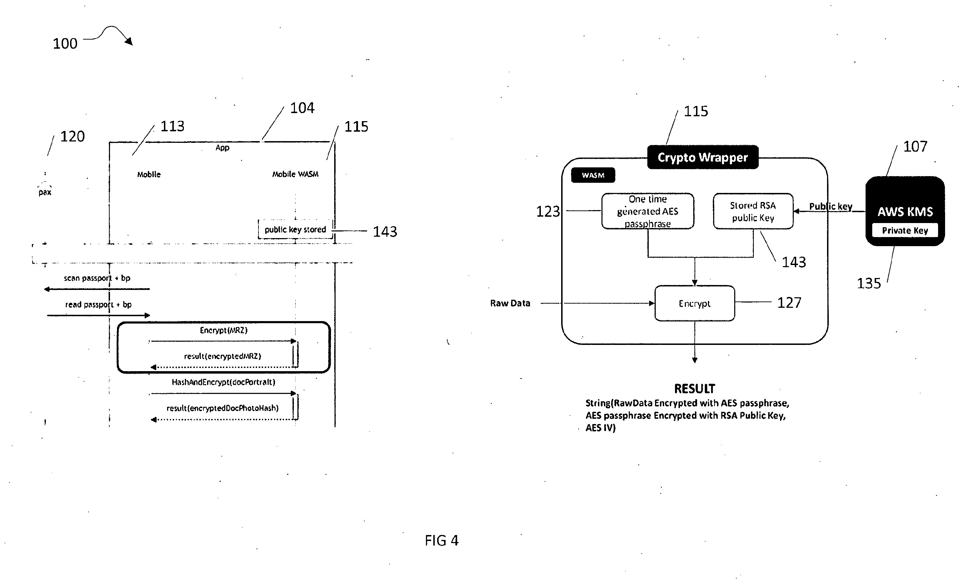

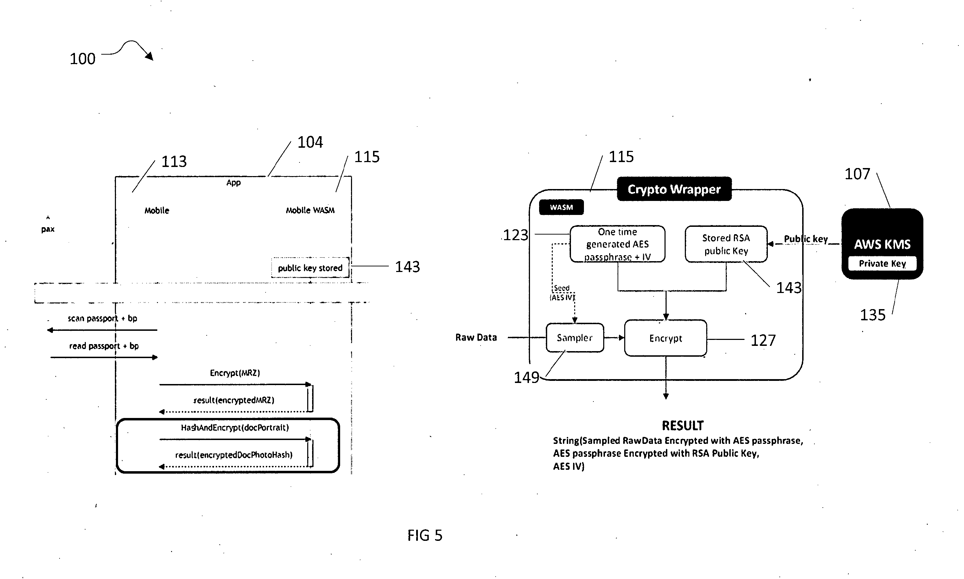

The computing operations by which the Crypto Wrapper 115 executing on the Client Application 104 respectively encrypts the MRZ, and hashes and encrypts the document Portrait are described by reference to Figures 4 and 5.

As shown in Figure 4, the Crypto Wrapper 115 stores an RSA public key 143. The RSA public key 143 can be hard coded into the WASM code of the Mobile Application 104 or be dynamically generated on the Client Device 104 or on the server side. To encrypt the MRZ extracted from the passport, the Crypto Wrapper 115 generates a one-time Advanced Encryption Standard (AES) passphrase using the AES Generator 123 and derives an encryption key from the passphrase. The AES Generator 123 encrypts the passphrase using the RSA public key 143. The Encryption Module 127 encrypts the MRZ using the derived encryption key. The result of the encryption operation is a string that contains the cyphertext of the MRZ, the encrypted AES passphrase and an Initialisation Vector that was used in the encryption.

As shown in Figure 5, the AES Generator 123 utilises the AES passphrase and Initialisation Vector to seed a Sampler Module 149. In the illustrated embodiment, the Sampler Module 149 receives the document portrait and computes a hash. The Sampler Module 149 passes the hashed document portrait to the Encryption Module 127 that encrypts the hashed document portrait using the AES passphrase, RSA public key and Initialisation Vector. The result of the hashing and encryption operations is a string that contains the encrypted hash, the AES passphrase encrypted with the RSA public key and the Initialization Vector that was used in the encryption.

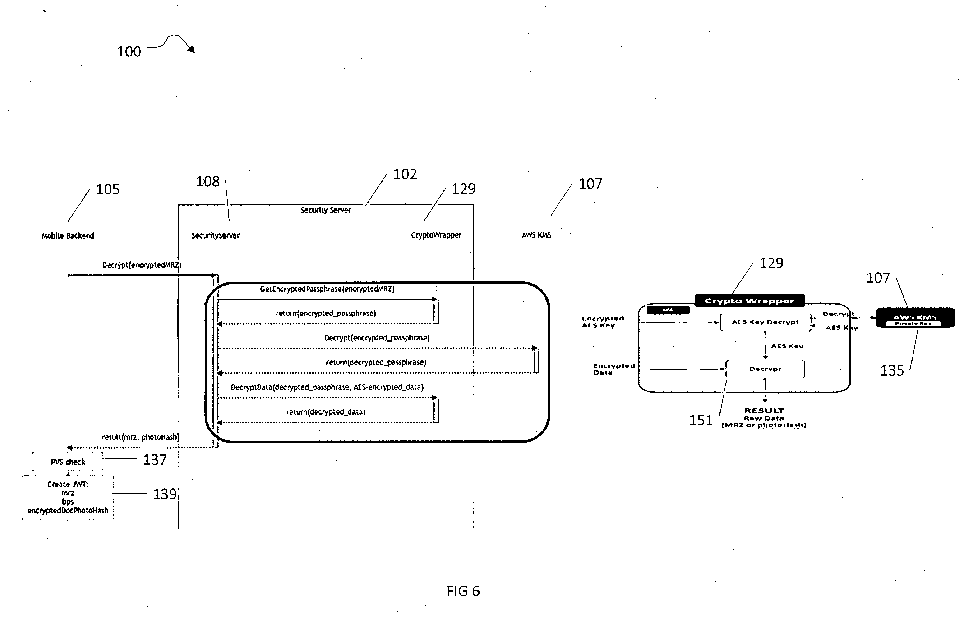

Figure 6 illustrates the computing operations that the Crypto Wrapper 129 executing on the Security Server 102 performs to decrypt the encrypted AES passphrase and encrypted data (namely the encrypted MRZ and encrypted hash of the document portrait). After receiving the encrypted AES passphrase from the Security Server 108, the Crypto Wrapper 129 forwards the encrypted AES passphrase to the KMS 107 with a request for it to be decrypted. The KMS decrypts the AES passphrase using the stored private key 135 and returns a decrypted AES key to the Crypto Wrapper 129. A Decryption Module 151 executing on the Crypto Wrapper utilises the decrypted AES key to decrypt the encrypted data that was previously supplied to the Crypto Wrapper 129. In the illustrated embodiment, the Decryption Module 151 decrypts and recovers the MRZ and/or the hash of the document portrait.

The present invention can also utilise cryptographic signature validation to ensure the integrity of data submitted to the Security Server System 102. The Key Management Service 107 can perform document signing via a suitable API. Once the encryption key is generated, the public key used to verify the document signature is communicated to the Security Server System 102 for use with validating biometric enrolment requests.

In one embodiment, the document signature is generated based on the following enrolment fields in JSON object:
- MRZ
- BCBP
- SHA256 hash of base64 LivePhoto
- SHA256 hash of base64 TravelDocPhoto

In the exemplified embodiment, the SHA256 hash of both base64 encoded photos is used to ensure the entire document fits within any limits imposed by the Key Management Service 107. The resulting enrolment request comprises the following fields:
- CaseRef
- AreaCode
- TravelDocPhoto
- LivePhoto
- MRZ
- BCBP
- ScanTime
- Signature

Once an enrolment request is received, the Security Service Application 108 performs the following operations:
- checking that the Signature field is not empty;
- create a new JSON document as above, including the SHA256 hash of both photos;
- performing signature validation with the requisite public key;

If the signature is validated, then enrolment can proceed.

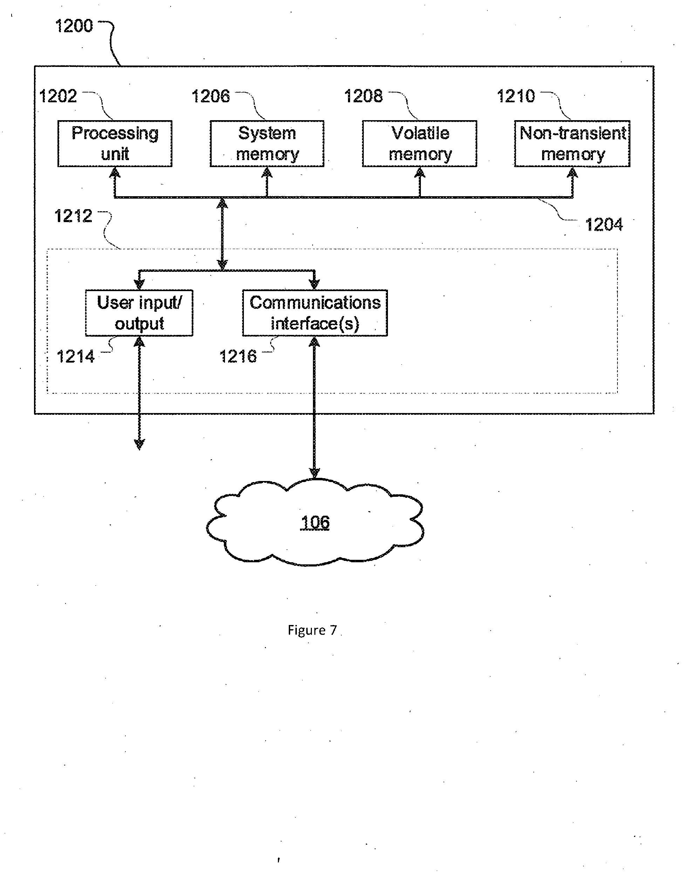

Figure 7 provides a block diagram of a computer processing system 1200 configurable to implement embodiments and/or features described herein. System 1200 is a general purpose computer processing system. It will be appreciated that Figure 12 does not illustrate all functional or physical components of a computer processing system. For example, no power supply or power supply interface has been depicted, however system 1200 will either carry a power supply or be configured for connection to a power supply (or both). It will also be appreciated that the particular type of computer processing system will determine the appropriate hardware and architecture, and alternative computer processing systems suitable for implementing features of the present disclosure may have alternative components to those depicted.

Computer processing system 1200 includes at least one processing unit 1202. The processing unit 1202 may be a single computer processing device (e.g. a central processing unit, graphics processing unit, or other computational device), or may include a plurality of computer processing devices. In some instances all processing will be performed by processing unit 1202, however in other instances processing may also be performed by remote processing devices accessible and useable (either in a shared or dedicated manner) by the system 1200.

Through a communications bus 1204 the processing unit 1202 is in data communication with a one or more machine readable storage (memory) devices which store instructions and/or data for controlling operation of the processing system 1200. In this example system 1200 includes a system memory 1206 (e.g. a BIOS), volatile memory 1208 (e.g. random access memory such as one or more DRAM modules), and non-volatile memory 1210 (e.g. one or more hard disk or solid state drives).

System 1200 also includes one or more interfaces, indicated generally by 1212, via which system 1200 interfaces with various devices and/or networks. Generally speaking, other devices may be integral with system 1200, or may be separate. Where a device is separate from system 1200, connection between the device and system 1200 may be via wired or wireless hardware and communication protocols, and may be a direct or an indirect (e.g. networked) connection.

Wired connection with other devices/networks may be by any appropriate standard or proprietary hardware and connectivity protocols. For example, system 1200 may be configured for wired connection with other devices/communications networks by one or more of: USB; FireWire; eSATA; Thunderbolt; Ethernet; OS/2; Parallel; Serial; HDMI; DVI; VGA; SCSI. Other wired connections are possible.

Wireless connection with other devices/networks may similarly be by any appropriate standard or proprietary hardware and communications protocols. For example, system 1200 may be configured for wireless connection with other devices/communications networks using one or more of: infrared; Bluetooth; Wi-Fi; near field communications (NFC); Global System for Mobile Communications (GSM), Enhanced Data GSM Environment (EDGE), long term evolution (LTE), wideband code division multiple access (W-CDMA), code division multiple access (CDMA). Other wireless connections are possible.

Generally speaking, and depending on the particular system in question, devices to which system 1200 connects-whether by wired or wireless means-include one or more input devices to allow data to be input into/received by system 1200 for processing by the processing unit 1202, and one or more output device to allow data to be output by system 1200. Example devices are described below, however it will be appreciated that not all computer processing systems will include all mentioned devices, and that additional and alternative devices to those mentioned may well be used.

For example, system 1200 may include or connect to one or more input devices by which information/data is input into (received by) system 1200. Such input devices may include keyboards, mice, trackpads, microphones, accelerometers, proximity sensors, GPS devices and the like. System 1200 may also include or connect to one or more output devices controlled by system 1200 to output information. Such output devices may include devices such as a CRT displays, LCD displays, LED displays, plasma displays, touch screen displays, speakers, vibration modules, LEDs/other lights, and such like. System 1200 may also include or connect to devices which may act as both input and output devices, for example memory devices (hard drives, solid state drives, disk drives, compact flash cards, SD cards and the like) which system 1200 can read data from and/or write data to, and touch screen displays which can both display (output) data and receive touch signals (input).

System 1200 may also connect to one or more communications networks (e.g. the Internet, a local area network, a wide area network, a personal hotspot etc.) to communicate data to and receive data from networked devices, which may themselves be other computer processing systems.

System 1200 may be any suitable computer processing system such as, by way of non-limiting example, a server computer system, a desktop computer, a laptop computer, a netbook computer, a tablet computing device, a mobile/smart phone, a personal digital assistant, a personal media player, a set-top box, a games console.

Typically, system 1200 will include at least user input and output devices 1214 and a communications interface 1216 for communication with a network such as network 106 of environment 100.

System 1200 stores or has access to computer applications (also referred to as software or programs)-i.e. computer readable instructions and data which, when executed by the processing unit 1202, configure system 1200 to receive, process, and output data. Instructions and data can be stored on non-transient machine readable medium accessible to system 1200. For example, instructions and data may be stored on non-transient memory 1210. Instructions and data may be transmitted to/received by system 1200 via a data signal in a transmission channel enabled (for example) by a wired or wireless network connection.

Applications accessible to system 1200 will typically include an operating system application such as Microsoft Windows^{®}, Apple OSX, Apple IOS, Android, Unix, or Linux.

System 1200 also stores or has access to applications which, when executed by the processing unit 1202, configure system 1200 to perform various computer-implemented processing operations described herein. For example, and referring to the environment of Figure. 1 above, client system 104 includes a Mobile Application 112 which configures the client system 104 to perform the described client system operations. Similarly, Security Server System 102 includes a Security Server Application 108 which configures the Security server System 102 to perform the described server system operations.

The flowcharts illustrated in the figures and described above define operations in particular orders to explain various features. In some cases, the operations described and illustrated may be able to be performed in a different order to that shown/described, one or more operations may be combined into a single operation, a single operation may be divided into multiple separate operations, and/or the function(s) achieved by one or more of the described/illustrated operations may be achieved by one or more alternative operations. Still further, the functionality/processing of a given flowchart operation could potentially be performed by different systems or applications.

Variations and modifications may be made to the parts previously described without departing from the spirit or ambit of the disclosure.

The present specification describes various embodiments with reference to numerous specific details that may vary from implementation to implementation. No limitation, element, property, feature, advantage or attribute that is not expressly recited in a claim should be considered as a required or essential feature. Accordingly, the specification and drawings are to be regarded in an illustrative rather than a restrictive sense.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A method for communicating with a security server performed by an application executing on a mobile device, the method comprising the application:
receiving biographic data captured from a passport;
receiving biometric data captured from the passport;
encrypting the biographic data to generate encrypted biographic data;
processing the biometric data to generate processed biometric data;
communicating the encrypted biographic data and processed biometric data to the security server for submission to a validation operation;
receiving a validation result message;
in the event that the validation result message indicates success of the validation operation, receiving confirmation biometric data captured by the mobile device;
communicating the confirmation biometric data to the security server for submission to a biometric enrolment operation; and
receiving an enrolment result message indicating a result of the biometric enrolment operation.

2. A method according to claim 1, further comprising:
receiving travel data from the mobile device; and
communicating the travel data to the security server for submission to the validation operation.

3. A method according to claim 1 or claim 2, wherein processing the biometric data to generate processed biometric data comprises hashing the biometric data.

4. A method according to any one of the preceding claims, wherein the confirmation biometric data is a facial image captured using the mobile device.

5. A method according to any one of the preceding claims, further comprising encrypting the processed biometric data to generate encrypted processed biometric data and communicating the encrypted processed biometric data to the security server for submission to the validation operation.

6. A method according to claim 2, wherein the validation operation comprises performing a comparison operation on the biographic data and travel data to determine a degree of similarity between the biographic data and the travel data.

7. A method according to any one of the preceding claims, further comprising communicating the biometric data to the security server for submission to the biometric enrolment operation.

8. A method according to any one of the preceding claims, wherein encrypting the biographic data to generate encrypted biographic data comprises the application:
deriving an encryption key from a key input; and
encrypting the biographic data with the derived encryption key.

9. A method according to claim 8, wherein encrypting the biographic data to generate encrypted biographic data further comprises encrypting the key input with a public key to generate an encrypted key input.

10. A method according to claim 7, wherein the biometric enrolment operation comprises performing a comparison operation on the biometric data and confirmation biometric data to determine a degree of similarity between the biometric data and the confirmation biometric data.

11. A method according to claim 7 or claim 8, wherein the biometric enrolment operation comprises:
processing the biometric data to generate new processed biometric data; and
performing a comparison operation on the processed biometric data and new processed biometric data to determine a degree of similarity between the processed biometric data and the new processed biometric data.

12. A method according to any one of the preceding claims, wherein the validation operation comprises storing a validation data structure, the validation data structure comprising the encrypted biographic data and processed biometric data.

13. A method according to claim 12, further comprising the application receiving the validation data structure with or separately to the validation result message. ,
